# EUROPEAN PATENT SPECIFICATION

(11) **EP 1 058 203 B1**
(45) Date of publication and mention of the grant of the patent: **28.05.2003**
(21) Application number: 00203126.8
(22) Date of filing: 04.11.1994
(51) Int. Cl.: G06K 7/10, G06K 7/06, G06K 13/08, G06K 17/00

(54) **A portable terminal unit for use in an information processing system**
Tragbares Endgerät für ein Informationsverarbeitungssystem
Terminal portable pour un système de traitement de données

(30) Priority: 09.11.1993 JP 30483693; 09.11.1993 JP 30483793; 09.11.1993 JP 30483593; 09.11.1993 JP 30484693; 09.11.1993 JP 30483493
(43) Date of publication of application: 06.12.2000
(62) Divisional of application: 94402489.2
(73) Proprietor: FUJITSU LIMITED, Kawasaki-shi, Kanagawa 211-8588 (JP)
(72) Inventor: Obato, Takao, Inagi-shi, Tokyo 206 (JP); Kumagai, Mitsuaki, Inagi-shi, Tokyo 206 (JP); Sato, Makoto, Inagi-shi, Tokyo 206 (JP); Okawado, Akira, Inagi-shi, Tokyo 206 (JP); Kobayashi, Toshiyuki, Inagi-shi, Tokyo 206 (JP); Akasawa, Nobuaki, Inagi-shi, Tokyo 206 (JP); Okano, Masahiko, Inagi-shi, Tokyo 206 (JP); Miyanaga, Takao, Inagi-shi, Tokyo 206 (JP); Miyata, Maki, Yokohama-shi, Kanagawa 226 (JP); Iura, Akihiko, Kawasaki-shi, Kanagawa 211-8588 (JP); Murata, Akio, Kawasaki-shi, Kanagawa 211-8588 (JP); Yamamoto, Shinji, Kawasaki-shi, Kanagawa 211-8588 (JP); Tsurumaru, Shinichiro, Kawasaki-shi, Kanagawa 211-8588 (JP)
(74) Representative: Joly, Jean-Jacques

(56) References cited:
- WO-A-89/04016
- FR-A- 2 689 274
- GB-A- 2 256 081
- US-A- 4 418 830

## Description

### BACKGROUND OF THE INVENTION

### 1. Field of the Invention

The present invention relates to a portable terminal unit for use in an information processing system.

### 2. Description of the Related Art

In recent years, portable terminal units such as hand-held terminals (Hats) are widely used for managing commodities, reading gas and electric meters, and the like.

Generally, a hand-held terminal has a keyboard to input data, a display such as a liquid crystal display, and a printer. Various data are entered into the hand-held terminal, and the entered data are displayed. Since the hand-held terminal is hand-carried, it is designed to be compact and light. A hand-held terminal often employs a memory card such as an IC card as an external storage medium. The memory card stores data entered into the hand-held terminal. The memory card is usually installed in the hand-held terminal from an upper end or a lower end thereof by a memory card loading mechanism installed therein.

However, the locations of the keyboard, the display, and the printer are more or less limited due to the method of use conditions thereof. Further, the hand-held terminal usually incorporates a battery, a modem for communicating data to a larger apparatus, and a connector for connecting the hand-held terminal to the larger apparatus whose position is generally fixed. Accordingly, the position for inserting the memory card is also limited and the width and thickness of the hand-held terminal may be increased by the installation of the memory card, thus having a negative effect on the compactness of the hand-held terminal.

In addition to designing a hand-held terminal that is compact and light, the hand-held terminal is required to have high-performance. Usually, the hand-held terminal is provided with an optical connector to communicate with a larger apparatus by using a transmission adaptor. That is, the data input into the hand-held terminal are transmitted to a larger apparatus by connecting the hand-held terminal to a transmission adaptor.

Conventionally, when the hand-held terminal communicates with the higher apparatus, an RS232C interface is used. Further, to reduce the size of the hand-held terminal, the prior art multiplexes RS232C interface signals and uses a pair of light emitting and receiving elements to send and receive data. If the hand-held terminal employs a large capacity memory, it must employ a high-speed interface to transmit data at high speed.

High-speed data transmission can be realised by employing a new interface and a connector dedicated to the interface. Installing these additional elements in addition to the conventional RS232C interface, however, is disadvantageous in terms of the compactness and light weight of the portable terminal unit.

Further, the conventional hand-held terminal is equipped with an electrical connector for connecting an external optional device. For example, a card reader for reading a magnetic card may be attached to the hand-held terminal as an optional device to add a function that is not originally present in the hand-held terminal. In this case, the external optional device is connected to the hand-held terminal with connectors and may be fixed thereto with at least one screw.

The connectors are fixed to the respective apparatuses or to printed circuit boards of the respective apparatuses. When connecting the apparatuses together, the connectors must be accurately positioned in relation to each other. This makes the connection work complicated.

In addition, connection of the external optional device makes the size of the hand-held terminal larger when the position of the connector on the hand-held terminal is not proper.

Incidentally, since the hand-held terminal can be used under various conditions, they should be sealed to prevent moisture or liquids from entering the terminal. The hand-held terminal may have a moisture resistant seal made of, for example, rubber. The seal is generally held between an upper casing and a lower casing of the hand-held terminal.

The lower part of the hand-held terminal may be provided with a connector to be connected to an external device and a jack for charging a battery incorporated in the hand-held terminal. The connector and jack may be provided with a moisture-and-dust-resistant cover made of rubber or resin. When transmitting data to an external device or when charging the battery, the covers are removed. Since the removed covers may be lost, to prevent this, there may be provided a notch on the casing and a T-shaped projection on the cover. The T-shaped projection of the cover can then be inserted into the notch of the casing, to fix the cover to the casing. The cover is sometimes extended therefrom to cover an interface connector.

However, the prior art that puts rubber between an upper casing and a lower casing provides poor workability and makes the size of the housing of the hand-held terminal larger. That is, the rubber must be made large enough to prevent the rubber from peeling off and moisture from penetrating. Further, if the T-shaped projection of the connector cover is loose in the notch, the projection may easily slip out of the notch of the casing, to cause the cover to be lost and provide poor moisture resistance.

Since the above-described hand-held terminals are usually carried around, they usually employ batteries, in particular, rechargeable batteries, as a power source.

The transmission adaptor is interposed between the hand-held terminal and the larger apparatus, to transmit data from the hand-held terminal to the larger apparatus, or from the larger apparatus to the hand-held terminal. The hand-held terminal and transmission adaptor may be connected to each other through optical connectors using on interface such as a RS232C interfaces.

When transmitting data to the larger apparatus, the hand-held terminal must be connected to a transmission adaptor. While the hand-held terminal is connected to the transmission adaptor to transmit data to the larger apparatus, the transmission adaptor charges the battery of the hand-held terminal. In this case, the hand-held terminal is provided with a battery charging jack and the transmission adaptor has a battery charging terminal. When the hand-held terminal is connected to the transmission adaptor, the jack is connected to the terminal to start charging the battery of the hand-held terminal. Power for this charging operation is supplied by a power source circuit in the transmission adaptor.

However, the transmission adaptor must charge the hand-held terminal, and at the same time, carry out data transmission between the hand-held terminal and the larger apparatus. The charging operation requires a relatively large amount of power, so that, the power source of the transmission adaptor must have a large capacity. This results in enlarging the power source of the transmission adaptor.

It is always required to minimise the hand-held terminal and transmission adaptor. If the power source of the transmission adaptor is large, the size of the transmission adaptor cannot be minimised. Also, when the transmission adaptor simultaneously carries out the charging and data transmission operations, the transmission adaptor consumes a large amount of power, thereby making the power source circuit of the transmission adaptor large.

### SUMMARY OF THE INVENTION

The object of the present invention is to provide a portable terminal unit having a buzzer and improved moisture resistance characteristics and to reduce the size of the hand-held terminal by improving the shape of the sealing rubber.

In order to accomplish the above-mentioned object, the present invention, concerns a portable terminal unit as in claim 1.

### BRIEF DESCRIPTION OF THE DRAWINGS

The present invention will be more clearly understood from the description as set forth below with reference to the accompanying drawings, wherein:
Fig. 1 is a diagram illustrating the appearance of a conventional hand-held terminal and a memory card to be inserted therein;
Fig. 2 is a block diagram illustrating an internal constitution of a conventional hand-held terminal and a transmission adaptor;
Fig. 3A is a diagram illustrating a plan view and a bottom view of a conventional hand-held terminal and an external optional device;
Fig. 3B is a enlarged sectional view of a connector according to a prior art;
Fig. 4A is a cross-sectional view showing an upper casing, lower casing and a rubber seal according to a prior art;
Fig. 4B is explanatory view showing a connection of lower casing and a connector cover according to a prior art;
Fig. 5 is a block diagram illustrating an internal constitution of a conventional transmission adaptor;
Fig. 6 is a diagram illustrating a front view of a hand-held terminal according to the present invention;
Fig. 7 is a diagram illustrating a bottom view of a hand-held terminal according to the present invention;
Fig. 8 is a diagram illustrating a front view of a transmission adaptor;
Fig. 9A is a diagram illustrating a front view of a hand-held terminal with a rubber seal according to an embodiment of the present invention;
Fig. 9B is a diagram illustrating a bottom view of a hand-held terminal with a rubber seal according to an embodiment of the present Invention;
Fig. 10A is an exploded sectional view of the upper casing and the lower casing according to an embodiment of the present Invention;
Fig. 10B is a enlarged partial sectional view showing the moisture resistant seal engaged with an upper casing of the hand-held terminal according to an embodiment of the present invention;
Fig. 10C is a enlarged partial sectional view showing the moisture resistant seal engaged with a screw hole of the upper casing of the hand-held terminal according to an embodiment of the present invention;
Fig. 11 is a diagram illustrating a connector cover formed together with a moisture resistant seal according to an embodiment of the present invention;
Fig. 12 is a cross-sectional view showing a buzzer area according to an embodiment of the present invention.

### DESCRIPTION OF THE PREFERRED EMBODIMENTS

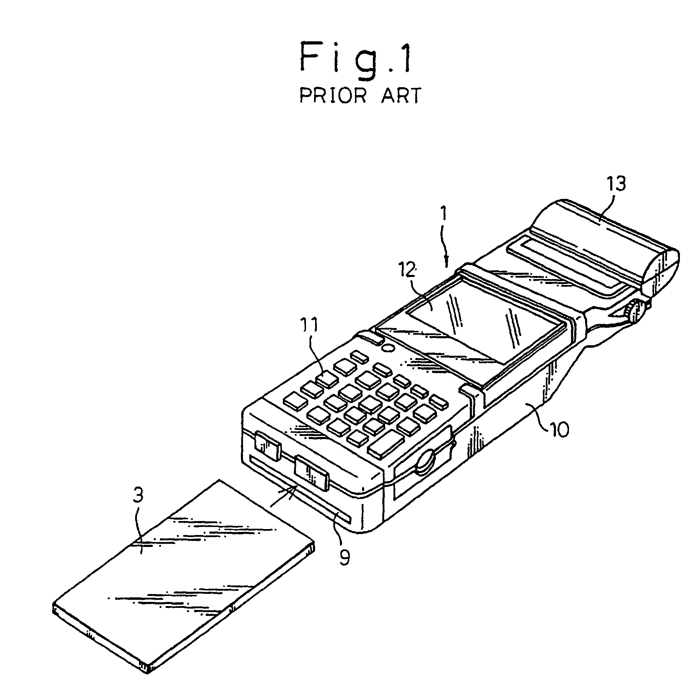

Before describing the preferred embodiments, an explanation will be given of a conventional information processing system using a portable terminal unit and a data communication adaptor therefor as shown in Figs. 1 to 5.

Figure 1 illustrates the appearance of a hand-held terminal 1 as a portable terminal unit according to a prior art. The hand-held terminal 1 has a slot 9 for inserting a memory card 3, a keyboard 11 serving as an input device, a liquid crystal display 12 serving as a display unit, a printer 13, and some connectors. The liquid crystal display 12 has a touch panel for entering data.

Various data are entered into the hand-held terminal 1, and the entered data are displayed. Since the hand-held terminal 1 is hand-carried, it is designed to be compact and light.

The hand-held terminal 1 employs a memory card 3 such as an IC card as a removable storage medium. The memory card 3 stores data entered into the hand-held terminal 1.

The memory card 3 is usually installed In the hand-held terminal 1 from an upper end or a lower end thereof. In Fig. 1, the memory card 3 is installed in the hand-held terminal 1-through the slot 9.

The hand-held terminal 1 has the keyboard 11 serving as an input device, and the display 12. The locations of these units are more or less limited due to the use thereof. Namely, the keyboard 11 and display 12 occupy substantially all of the front face of the hand-held terminal 1. The back of the hand-held terminal 1 which is not shown is provided with an optical connector. These components will be explained later.

The hand-held terminal 1 incorporates a battery serving as a power source for the hand-held terminal 1, a printer 13 for printing data, a modem for exchanging data with a larger apparatus (host computer), and a connector for connecting the hand-held terminal 1 to the host computer. As and when required, the input data is transmitted to the host computer by connecting the hand-held terminal 1 to a transmission adaptor which will be explained later.

Among these components, the battery is usually located at the lower part of the hand-held terminal 1 and the printer 13 at the upper part thereof due to the issues of weight balance and convenience in use. For compactness, the width and thickness of the hand-held terminal 1 must be minimised. The sizes of the battery and printer 13, however, are usually fixed. Accordingly, the upper and lower parts of the hand-held terminal 1 have virtually no free space due to the battery, etc.

The connector for communicating with the host computer is usually arranged at the lower part of the hand-held terminal 1 for convenience. Accordingly, it would be nearly impossible to enable loading the memory card 3 into the hand-held terminal 1 from the upper or lower end thereof if the size of the hand-held terminal is very small. To load the memory card 3 into the hand-held terminal 1 from the upper or lower end thereof, the hand-held terminal must be thicker as shown in Fig. 1.

One possibility is to load the memory card 3 into the hand-held terminal 1 from one side thereof. However, since the length of the memory card 3 is limited according to standards, the hand-held terminal 1 would have to wide enough to enclose the length of the memory card 3 if the memory card 3 is inserted entirely into the hand-held terminal 1 from the side thereof. The increased width of the hand-held terminal 1 spoils the compactness thereof.

The hand-held terminal 1 may be widened at only a portion where the memory card 3 is inserted, however, this makes the hand-held terminal 1 partly bulky, not handy to use, limits the freedom of design and makes the unit poor in appearance.

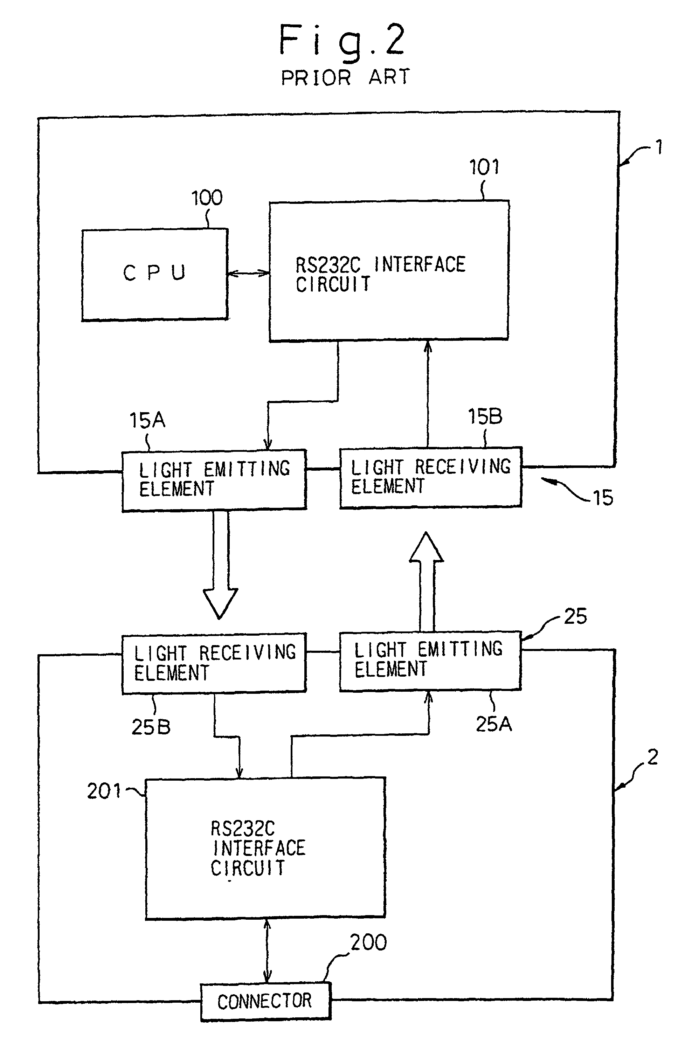

Figure 2 shows the inside of a hand-held terminal 1 and a transmission adaptor 2 according to a prior art. The hand-held terminal 1 and the transmission adaptor 2 have optical connectors 15 and 25 respectively, which send and receive data to and from each other. The optical connector 15 is comprised of a light emitting element 15A for transmitting data, and a light receiving element 15B for receiving data. The optical connector 25 is comprised of a light emitting element 25A and a light receiving element 25B.

The optical connectors 15 and 25 are non-contact connectors, which are stable even if the hand-held terminal 1 is repeatedly attached to and detached from the transmission adaptor 2. To transmit data to a larger apparatus (host computer), the hand-held terminal 1 is set on the transmission adaptor 2.

These apparatuses have, for example, RS232C interface circuits 101 and 201, and CPU 100 for totally controlling the hand-held terminal 1. To reduce the size of the hand-held terminal 1, the prior art multiplexes RS232C interface signals and uses a pair of light emitting and receiving elements 15A and 25B, and 25A and 15B.

However, if the hand-held terminal 1 employs a large capacity memory, it must employ a high-speed interface to transmit data at high speed.

High-speed data transmission can be realized by employing a new interface and a dedicated connector for the interface. Installing these additional elements in addition to the conventional RS232C interface circuit, however, is disadvantageous in terms of compactness and light weight of the portable terminal unit.

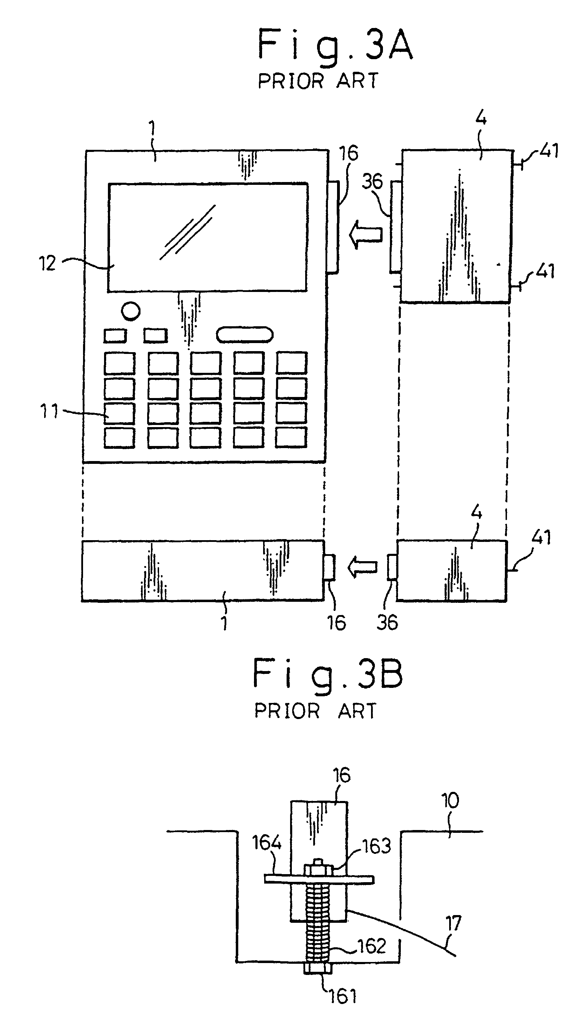

In order to add an optional function, an external optional device 3 can be attached to a portable terminal unit as shown in Fig. 3A. For example, a card reader for reading a magnetic cards may be attached to the hand-held terminal 1 to add a function that is not originally present in the hand-held terminal 1.

Figure 3A shows connection between the hand-held terminal 1 having the keyboard 11 and the display unit 12, and an external optional device 4. The external optional device 4 is connected to the hand-held terminal 1 by connectors 36 and 16 and fixed together with at least one screw 41.

The connectors 16 and 36 are fixed to the respective apparatuses or to printed boards of the respective apparatuses. When connecting the apparatuses together, the connectors must be accurately positioned in relation to each other. This makes the connection work complicated.

The position of the connectors 16 and 36 on the hand-held terminal 1 and the external optional device 4 may fluctuate due to manufacturing errors. If the positions of the connectors 16 and 36 to be connected together deviate too much, it will be very difficult to connect them together. If the deviation is very large, it will be impossible to connect them to each other.

To solve this problem, connectors 16 and 36 must be accurately positioned in the manufacturing process. Such an accurate arrangement of the connectors 16 and 36 takes a great deal of labor and time. If the positions of connectors 16 and 36 deviate too much, the connectors 16 and 36 will be subject to excessive force when the hand-held terminal 1 and the external optional device 4 are fixed together with screws. This will apply stress to the fitting portions of the connectors.

To cope with this situation, one of the connectors 16 and 36 may be mounted flexibly on the casing. Figure 3B shows a connector 16 fitting structure that has a certain degree of freedom in the position of a connector. This example does not fix the connector 16 to the casing 10 proper.

Threaded bolts 161 are first fixed to the casing 10. A spring 162 is arranged around each of the bolts 161. A connector 16 is set on the springs 162, and a nut 163 is set on each of the bolts 161. The springs 162 push the connector 16 upward. The connector 16 is slightly movable in a vertical direction. The diameter of the bolt 161 may be slightly smaller than that of a hole formed on a flange 164 of the connector 16 so that the connector 16 is slightly horizontally movable. Numeral 17 is a cable for connecting the connector 16 to a printed circuit board (not shown) in the hand-held terminal 1.

According to this mechanism, at least one of the connectors to be connected together is movable relative to the other, so that the accuracy in aligning the connectors need not be so accurate, and the joined connectors will not be subject to excessive stress.

Compared with fixed connectors, the movable connectors easily join corresponding apparatuses together, thereby improving workability.

This mechanism, however, additionally requires the processes of fitting bolts 161 and inserting springs 162, which increases labor and time required in manufacturing.

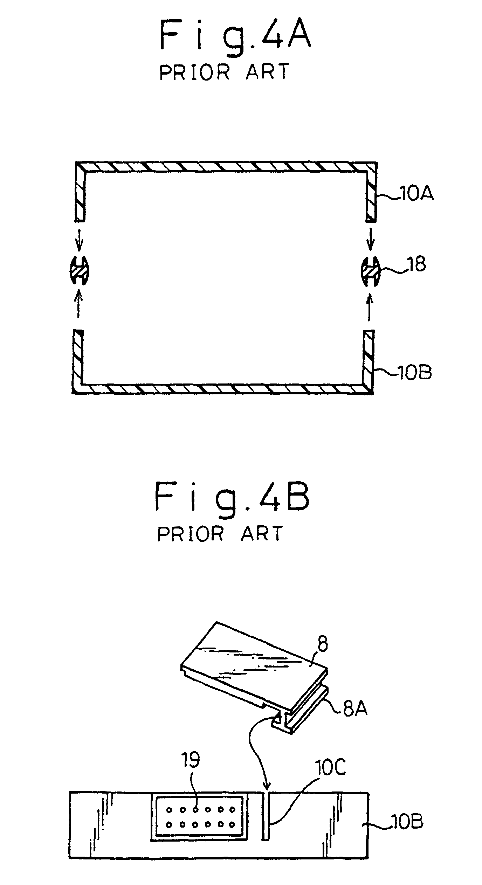

Usually, the hand-held terminal 1 has a moisture resistant seal 18 as shown in Fig. 4A made from, for example, rubber. The moisture resistant seal 18 is held between an upper casing 10A and a lower casing 10B of the hand-held terminal 1.

The lower part of the hand-held terminal 1 is provided with connectors to be connected to an external device and for charging a battery incorporated in the hand-held terminal 1. The connectors are provided with a moisture-and-dust-resistant cover made from rubber or resin. When transmitting data to an external device or when charging the battery, the covers are removed. However, the removed covers may be lost, or the covers on the connector, etc., may unexpectedly fall off. To prevent this, a prior art of Fig. 4B cuts a slot 10C in the lower casing 10B and a tab 8A on a cover 8. The tab 8A of the cover 8 is inserted into the slot 10C of the casing 10B, to fix the cover 8 to the casing 10B. The cover 8 covers the connector 19 when the connector 19 is not used.

The hand-held terminal 1 is usually provided with a buzzer for informing a user of the completion of data input. The buzzer must provide a predetermined volume of sound. For this purpose, the casing of the hand-held terminal 1 has an opening for the buzzer.

The prior art that uses rubber moisture resistant seal 18 between the upper casing 10A and the lower casing 10B provides poor workability. The moisture resistant seal 18 and casings 10A and 10B may form a gap that enables the rubber to peel off and moisture to enter the casing 10.

The connector cover 8 having the tab 8A may easily come off out of the slot 10C of the casing 10 and become lost making the casing 10 susceptible to moisture.

The buzzer opening is disadvantageous because it allows moisture to enter. To provide moisture resistance, there can be no buzzer opening. However, this results in insufficient sound volume because a buzzer installed in the hand-held terminal produces a small volume of sound.

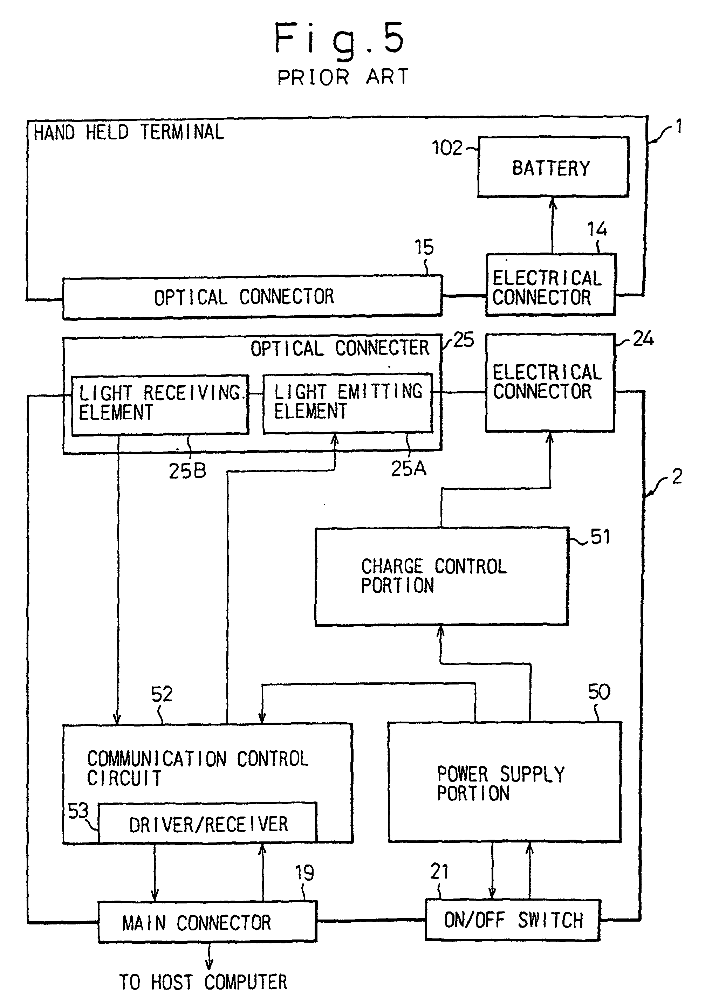

Figure 5 shows the transmission adaptor 2 and the hand-held terminal 1 according to a prior art. Numeral 102 is a battery provided in the hand-held terminal 1, for supplying power thereto. Numeral 50 is a power supply portion (power source) provided in the transmission adaptor 2. The power supply portion 50 supplies power to the transmission adaptor 1 and charges the battery 102 when ON/OFF switch 21 is ON. The ON/OFF switch is turned ON when the hand-held terminal 1 is connected to the transmission adaptor 2. Numeral 51 is a charge control portion for controlling the charging operation of the battery 102.

Numeral 52 is a communication control circuit for controlling communication between the hand-held terminal 1 and the host computer (not shown).

The transmission adaptor 2 is interposed between the hand-held terminal 1 and the host computer, to transmit data from the hand-held terminal 1 to the host computer, or from the host computer to the hand-held terminal 1. The hand-held terminal 1 and transmission adaptor 2 are connected to each other through the optical connectors 15 and 25 with the use of a interface such as an RS232C interface.

After the hand-held terminal 1 stores a given quantity of data, it must transmit the data to the host computer. The communication control circuit 52 controls data communication between the hand-held terminal 1 and the host computer. If the hand-held terminal 1 frequently transmits data to the host computer, the hand-held terminal is frequently connected to and removed from the transmission adaptor. In this case, the optical connectors 15.and 25 are advantageous because they are contactless connectors.

When transmitting data to the host computer, the hand-held terminal 1 must be connected to the transmission adaptor 2. While the hand-held terminal 1 is connected to the transmission adaptor 2 to transmit data to the host computer, the transmission adaptor 2 charges the battery 102 of the hand-held terminal 1. The lower part of the hand-held terminal 1 is provided with an electrical connector 14 for charging battery, in addition to the optical connector 15. The transmission adaptor 2 has an electrical connector 24 for charging the battery. When the hand-held terminal 1 is connected to the transmission adaptor 2, the electrical connectors 14 and 24 are connected together to start charging the battery 102 of the hand-held terminal 1. Power for this charging operation is supplied by the power supply portion 50.

The transmission adaptor 2 must charge the hand-held terminal 1, and at the same time, carry out data transmission between the hand-held terminal 1 and the host computer. The charging operation requires a relatively large amount of power, so that the power supply portion 50 of the transmission adaptor 2 must have a large capacity. This results in enlarging the power supply portion 50 of the transmission adaptor 2.

Although it is generally required to minimize the size of the hand-held terminal 1 and transmission adaptor 2, if the power supply portion 50 of the transmission adaptor 2 is large, the size of the transmission adaptor 2 cannot be reduced.

When the transmission adaptor 2 simultaneously carries out the charging and data transmission operations, the transmission adaptor 2 consumes large power, and the size of the power source circuit becomes large.

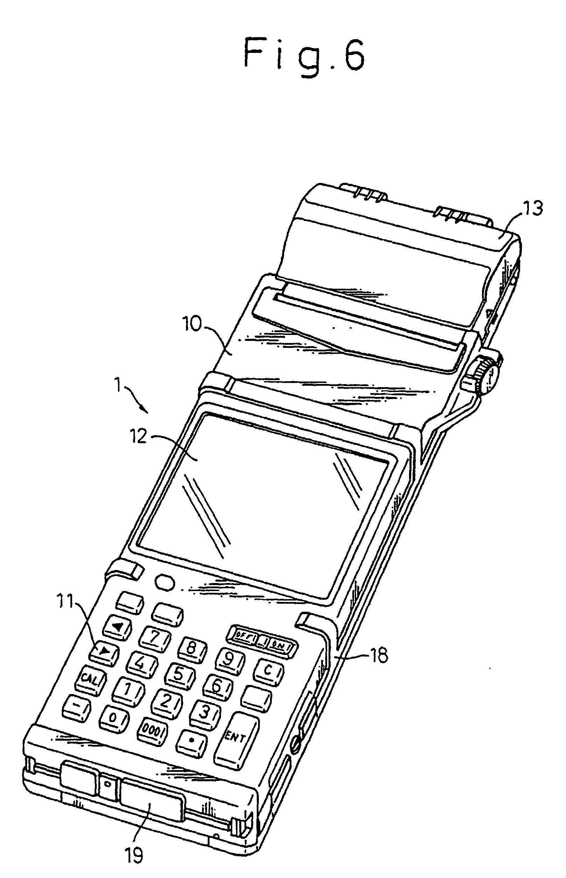

Figure 6 is a perspective view illustrating a front face of a hand-held terminal 1 according to the present invention. In Fig. 6, numeral 10 denotes a casing of the hand-held terminal 1, 11 denotes a keyboard, 12 denotes a display unit comprised of a liquid crystal display, 13 denotes a printer, 18 denotes a moisture resistant seal, and 19 denotes a main connector for communicating with the host computer. The main connector is covered by an extended part of the moisture resistant seal 18.

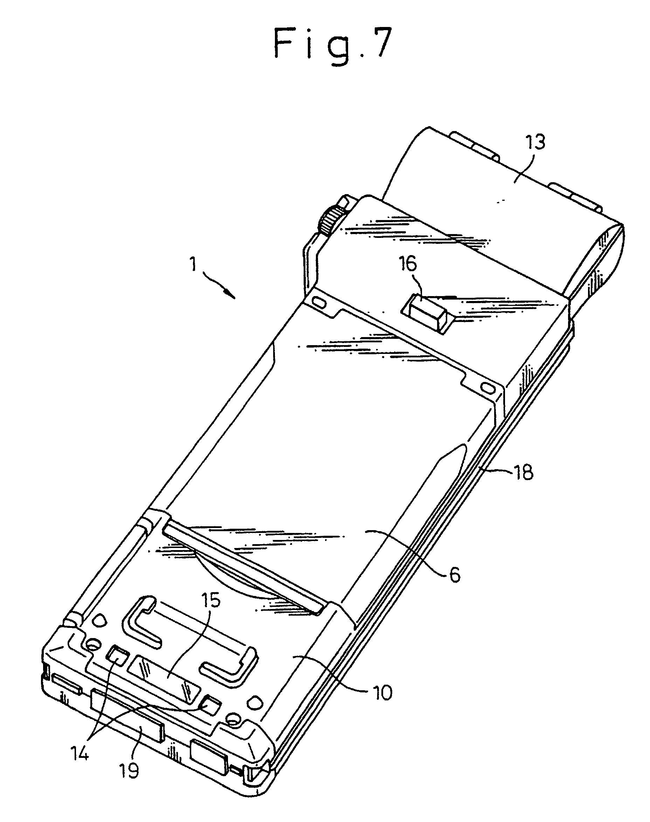

Figure 7 is a perspective view illustrating a bottom face of a hand-held terminal 1 according to the present invention. In Fig. 7, numeral 6 denotes a lid, 10 denotes a casing of the hand-held terminal 1, 13 denotes a printer, 14 denotes electrical connector for providing power to the hand-held terminal 1 to operate the hand-held terminal or charge a battery, 15 denotes an optical connector for transmitting data, 16 denotes an auxiliary connector for connecting an external optional device, 18 denotes a moisture resistant seal, and 19 denotes a main connector for communicating with the host computer. The main connector is covered by an extended part of the moisture resistant seal 18.

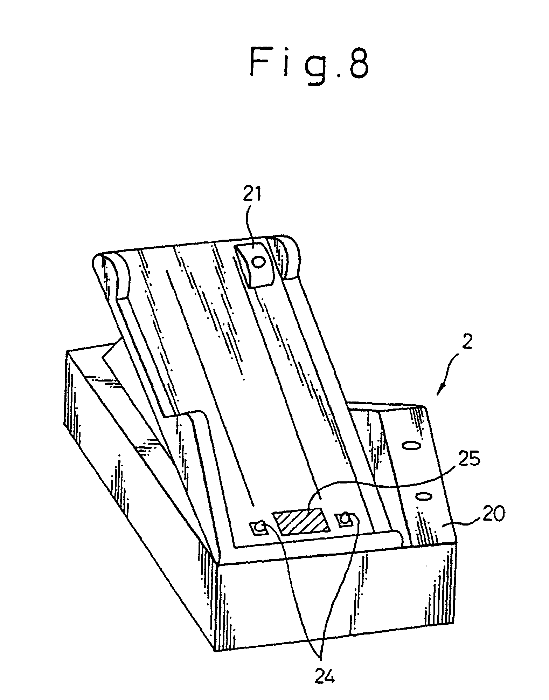

Figure 8 is a perspective view illustrating a front face of a transmission adaptor 2. In Fig. 8, numeral 20 denotes a casing of the transmission adaptor 2, 21 denotes an ON/OFF switch, 24 denotes electrical connectors for supplying power to the hand-held terminal 1 to operate the hand-held terminal or charge a battery, and 25 denotes an optical connector for transmitting data. The ON/OFF switch 21 is turned ON when the hand-held terminal 1 is placed on the transmission adaptor 2.

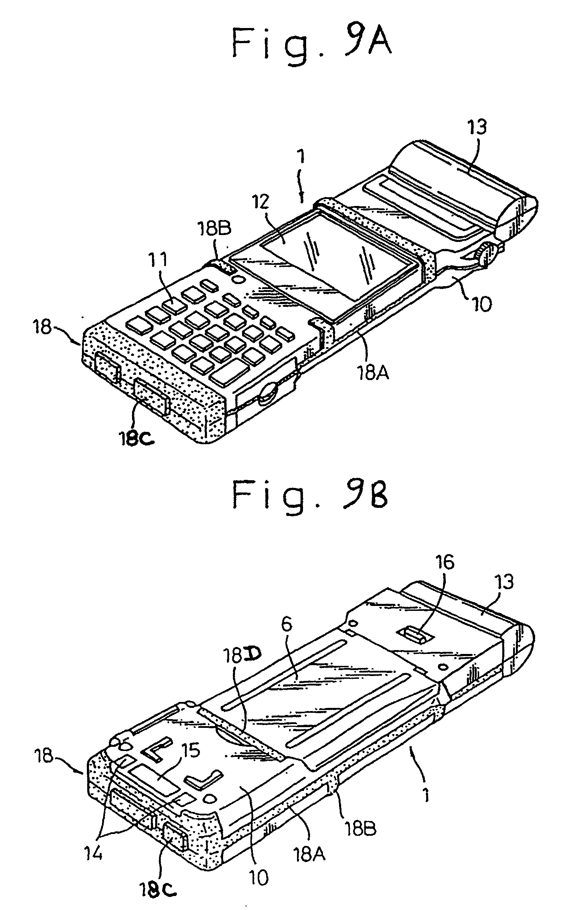

Figure 9A is perspective view showing the hand-held terminal 1 with moisture resistant seal and Fig. 9B is a perspective bottom view of a hand-held terminal 1 with moisture resistant seal according to an embodiment of the present invention.

In Fig. 9A and 9B, numeral 6 denotes a lid, 10 denotes a casing of the hand-held terminal 1, 11 denotes keyboard, 12 denotes a display unit comprised of a liquid crystal display, 13 denotes a printer, 14 denotes electrical connectors for receiving power to the hand-held terminal 1 to operate the hand-held terminal or charge a battery, 15 denotes an optical connector for transmitting data, 16 denotes an auxiliary connector for connecting an external optional device, 18 denotes a moisture resistant seal, and 19 denotes a main connector for communicating with the host computer, covered with an extended part of the moisture resistant seal 18.

In this embodiment, the moisture resistant seal 18 is made from rubber. It may be made from resin, in particular, soft resin. The moisture resistant seal 18 is arranged at openings and joints formed on a casing of the hand-held terminal 1. As shown in Figs. 9A and 9B, the moisture resistant seal 18 is applied to a side face seal 18A, a screw hole seal 18B, and a bottom seal of the hand-held terminal 1 including a connector cover 18C. In particular, the bottom portion of the hand-held terminal 1 is entirely covered with the bottom seal of the moisture resistant seal 18.

The moisture resistant seal 18 according to this embodiment is integral with an upper casing 10A of the hand-held terminal 1. Figure 10A is a sectional view showing the hand-held terminal 1. In this embodiment the moisture resistant seal 18 is made of a moisture resistant rubber sheet, and the moisture resistant seal 18 is formed integrally with the upper casing 10A, and the upper casing 10A is engaged with the lower casing 10B. The moisture resistant seal 18 fills a gap between the upper casing 10A and the lower casing 10B, to improve the moisture resistance of the hand-held terminal 1.

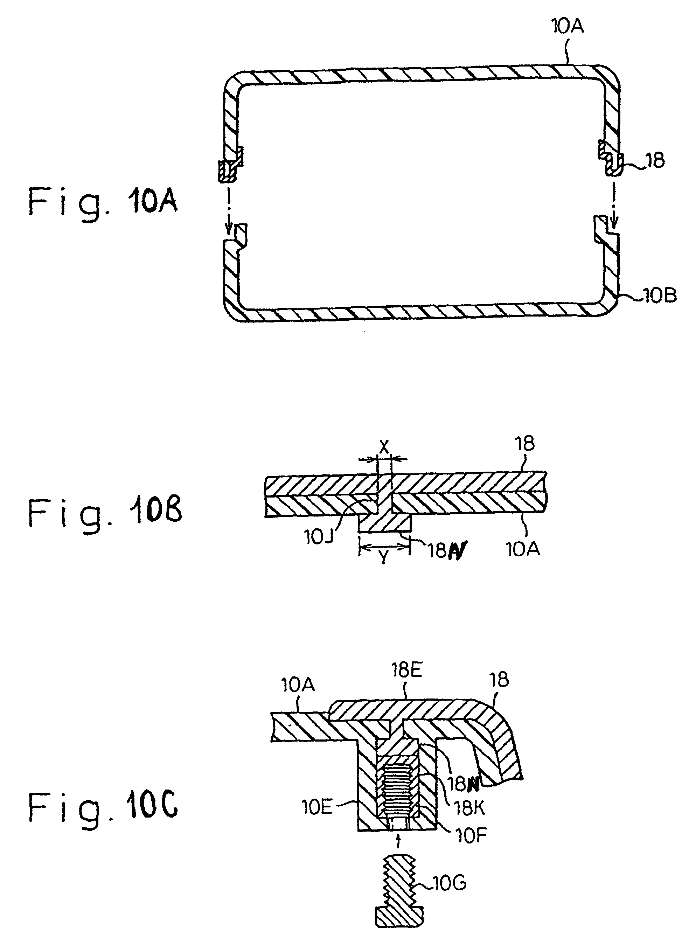

Figure 10B shows the moisture resistant seal 18 engaged with the upper casing 10A. The upper casing 10A is moulded and the moisture resistant seal 18 is laid on the upper casing 10A.

Forming of the moisture resistant seal 18 on the upper cover 10A will be explained hereinafter. The upper casing 10A Is firstly moulded. The moisture resistant seal 18 made of rubber is formed on the upper casing 10A. The upper casing 10A has holes 10J arranged thereon. When rubber is applied to the upper casing 10A, the rubber enters the holes 10J. Accordingly, the moisture resistant seal 18 nearly completely adheres to the upper casing 10A. Due to rubber entered in the holes 10J, the moisture resistant seal 18 is strongly fixed to the upper casing 10A. Such a strong adhesion of the moisture resistant seal 18 is not achievable by the prior art. To prevent the moisture resistant seal 18 from peeling off, the width Y of the moisture resistant seal 18 projecting from the holes 10J is larger than the width X of the holes 10J, so that the notch part 18N will not escape from the hole 10J.

The moisture resistant seal 18 is extended along the periphery of the apparatus as shown in Fig. 10C. In Fig. 10C, a hole 18K for an internally threaded insert 10F formed in a boss 10E projected on the upper casing 10A is partially filled with the rubber that forms the notch part 18N of the extended part of the moisture a resistant seal 18. This arrangement more strongly attaches the moisture resistant seal 18 to the upper casing 10A and fills the end of the hole 18K to prevent the threaded insert 10F and a mating screw 10G from allowing moisture to enter the case.

The moisture resistant cover completely fills a gap between the upper casing 10A and the lower casing 10B, to improve the moisture resistant characteristics of the hand-held terminal 1.

Further, the moisture resistant seal 18 made from rubber is arranged where the lid 6 is in contact with the casing 10 of the hand-held terminal 1 as shown in Fig. 9B. The moisture resistant seal 18 fills a gap between the casing 10 and the lid 6, to prevent moisture from entering the hand-held terminal 1 from the back thereof. The moisture resistant seal 18 is also arranged around an opening for a battery (not shown).

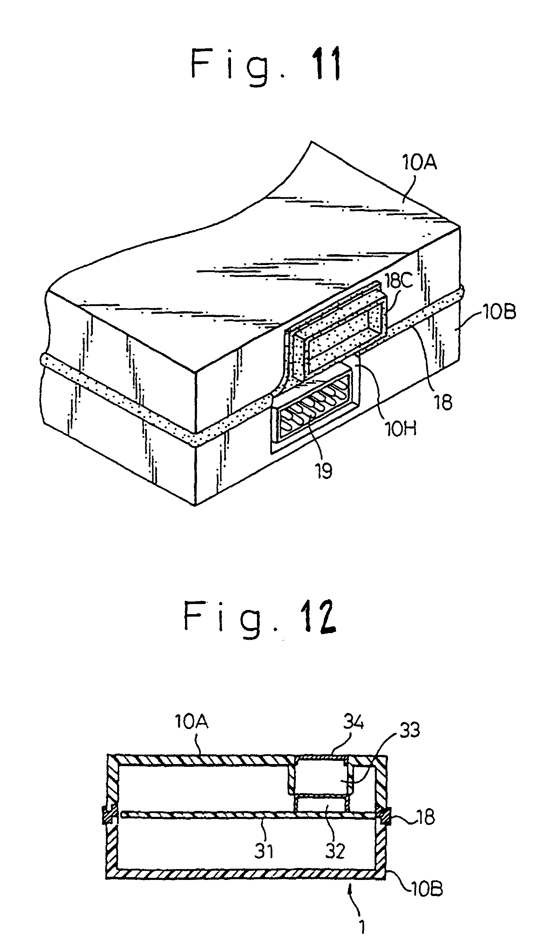

Figure 11 shows a connector cover 18C according to this embodiment, for covering the main connector 19 or a battery charging jack (not shown). The connector cover 18C is made from rubber and fitted to the connector 19 or the jack formed at lower part of the hand-held terminal 1.

In Fig. 11, the connector cover 18C is formed on a lower end of the hand-held terminal 1. The material of the connector cover 18C is the same as that of the moisture resistant seal 18 of the apparatus. The connector cover 18C is integral with the moisture resistant seal 18. The connector cover 18C can therefore never be unexpectedly dropped or lost.

Figure 12 is a sectional view showing part of the hand-held terminal 1 where a buzzer 32 is arranged, according to an applied embodiment of the present invention. The buzzer 32 is fitted to a printed circuit board 31. The upper casing 10A has an opening 33 corresponding to the buzzer 32. The opening 33 is covered with a rubber seal 34 that is integral with the upper casing 10A. This seal 34 provides the buzzer 32 area with complete moisture resistant characteristics. The rubber seal 34 for the buzzer 32 is thinner than the other rubber seals 18. The thin seal 34 will not dampen the sound volume of the buzzer 32.

As explained above, by using to the moisture resistant seal 18 integral with the upper casing 10A, the hand-held terminal 1 is tightly sealed. Further, the moisture resistant seal 18 will not easily peel off, thereby improving the moisture resistant capability of the hand-held terminal.

## Claims

1. A portable terminal unit (1) which is driven by a battery (102), and is equipped with a control circuit, a keyboard (11), and connectors, said portable terminal unit further comprising:
a casing (10) formed of an upper casing (10A) made of moulded plastic and of a lower casing (10B) made of moulded plastic;
a moisture resistant seal (18) made of rubber or resin integrally formed on one of the joining edges of the upper casing (10A) and the lower casing (10B);
a buzzer (32) provided inside the portable terminal unit (1),
**characterized in that**
said casing (10) has an opening (33) used for radiating an alarm from said buzzer (32), said moisture resistant seal (18) being extended to seal the opening.

2. A portable terminal unit (1) as set forth in claim 1, wherein the moisture resistant seal (18) is extended along an inner wall of the casing (10A) within a predetermined length.

3. A portable terminal unit as in claim 1 or 2, wherein said moisture resistant seal (18) has a bottom portion (18C) entirely covering a bottom portion of the portable terminal unit.

4. A portable terminal unit (1) as in any of claims 1-3, further comprising a main connector (19) and a connector cover (18C) made of the same material as the moisture resistant seal (18) and integral with said moisture resistant seal (18).

5. A portable terminal unit (1) as in any of claims 1 to 4, wherein the part (34) of the moisture resistant seal extending over the opening is thinner than the other parts of the moisture resistant seal.

## Patentansprüche

1. Tragbare Terminaleinheit (1), die von einer Batterie (102) betrieben wird und mit einer Steuerschaltung, einer Tastatur (11) und Verbindern ausgestattet ist, welche tragbare Terminaleinheit ferner umfaßt:
ein Gehäuse (10), das aus einem oberen Gehäuse (10A) aus gegossenem Kunststoff und aus einem unteren Gehäuse (10B) aus gegossenem Kunststoff hergestellt ist,;
eine Feuchtigkeits resistente Dichtung (18) aus Gummi oder Harz, die einstückig an einer der anliegenden Kanten des oberen Gehäuses (10A) und des unteren Gehäuses (10B) geformt ist;
einem Summer (32), der in der tragbaren Terminaleinheit (1) vorgesehen ist,
**dadurch gekennzeichnet, daß**
das Gehäuse (10) eine Öffnung (33) hat, die zum Abstrahlen von Alarm von dem Summer(32) verwendet wird, wobei die Peuchtigkeits resistente Dichtung (18) erstreckt ist, um die Öffnung abzudichten.

2. Portable Terminaleinheit (1) nach Anspruch 1, bei der die Feuchtigkeits resistente Dichtung (18) sich längs der inneren Wand des Gehäuses mit einer vorbestimmten Länge erstreckt.

3. Portable Terminaleinheit (1) nach Anspruch 1 oder 2, bei der die Feuchtigkeits resistente Dichtung (18) einen Bodenabschnitt (18C) hat, der einen Bodenabschnitt der tragbaren Terminaleinheit vollständig bedeckt.

4. Portable Terminaleinheit (1) nach einem der Ansprüche 1 bis 3, ferner mit einem Hauptverbinder (19) und einem Verbinder (18C), hergestellt aus dem selben Material wie die Feuchtigkeits resistente Dichtung (18) und einstückig mit der Feuchtigkeits resistenten Dichtung (18) ausgebildet. .

5. Tragbare Terminaleinheit nach einem der Ansprüche 1 bis 4, bei der ein Teil der Feuchtigkeits resistenten Dichtung, der sich über die Öffnung erstreckt, dünner ist als die anderen Teile der Feuchtigkeits resistenten Dichtung.

## Revendications

1. Unité de terminal portable (1) qui est alimentée par un accumulateur (102) et qui est équipée d'un circuit de commande, d'un clavier (11) et de connecteurs, ladite unité de terminal portable comprenant en outre :
un carter (10) qui est formé par un carter supérieur (10A) qui est réalisé en une matière plastique moulée et par un carter inférieur (10B) qui est réalisé en une matière plastique moulée ;
une étanchéité résistant à l'humidité (18) qui est réalisée en un caoutchouc ou en une résine, formée d'un seul tenant sur l'un des bords de jonction du carter supérieur (10A) et du carter inférieur (10B) ;
un avertisseur sonore (32) qui est prévu à l'intérieur de l'unité de terminal portable (1),
**caractérisée en ce que**:
ledit carter (10) comporte une ouverture (33) qui est utilisée pour diffuser une alarme en provenance dudit avertisseur sonore (32), ladite étanchéité résistant à l'humidité (18) étant étendue afin de rendre étanche l'ouverture.

2. Unité de terminal portable selon la revendication 1, dans laquelle l'étanchéité résistant à l'humidité (18) est étendue le long d'une paroi interne du carter (10A) dans une longueur prédéterminée.

3. Unité de terminal portable selon la revendication 1 ou 2, dans laquelle ladite étanchéité résistant à l'humidité (18) comporté une partie inférieure ou de fond (18C) qui recouvre en totalité une partie inférieure ou de fond de l'unité de terminal portable.

4. Unité de terminal portable selon l'une quelconque des revendications 1 à 3, comprenant en outre un connecteur principal (19) et un couvercle de connecteur (18C) qui est réalisé en le même matériau que l'étanchéité résistant à l'humidité (18) et d'un seul tenant avec l'étanchéité résistant à l'humidité (18).

5. Unité de terminal portable selon l'une quelconque des revendications 1 à 4, dans laquelle la partie (34) de l'étanchéité résistant à l'humidité qui s'étend au-dessus de l'ouverture est plus mince que les autres parties de l'étanchéité résistant à l'humidité.
